# EUROPEAN PATENT SPECIFICATION

(11) **EP 0 828 633 B1**
(45) Date of publication and mention of the grant of the patent: **11.08.1999**
(21) Application number: 95937216.0
(22) Date of filing: 22.11.1995
(51) Int. Cl.: B60N 2/42, B60N 2/22

(54) **SEAT AND VEHICLE EQUIPPED THEREWITH**
SITZ UND DAMIT AUSGESTATTETES FAHRZEUG
SIEGE ET VEHICULE EQUIPE DE CE SIEGE

(30) Priority: 25.11.1994 NL 9401985
(43) Date of publication of application: 18.03.1998
(73) Proprietor: Rasenberg, Johannes Theodorus Marie, NL-4841 CH Prinsenbeek (NL)
(72) Inventor: Rasenberg, Johannes Theodorus Marie, NL-4841 CH Prinsenbeek (NL)
(74) Representative: Bartelds, Erik
(86) International application number: NL9500398
(87) International publication number: WO9616834

(56) References cited:
- EP-A- 0 556 884
- EP-A- 0 581 592
- FR-A- 1 543 275
- GB-A- 1 069 647
- US-A- 2 109 728
- US-A- 5 290 089

## Description

The present invention relates to a seat, in particular for use in a vehicle, provided with a seat part, a seat back connected thereto on one side and means connected to the seat part for fixing thereof to a base, in particular a vehicle floor. Such a seat is generally known and is frequently applied in for instance vehicles such as cars, trains, aircraft and the like (see, for example, GB-A-1 069 647, corresponding to the preamble of claim 1.)

A vehicle seat must comply with a large number of different and often conflicting requirements. The seat must therefore make possible an optimal seating posture for a large number of different users, which makes high demands of the adjustability of the seat. In addition, the seat must meet stringent safety requirements to take account of the risk of accident that is ever present with vehicles. It has been found that it is difficult to combine the requirements of good adjustability and a high degree of safety in case of accidents. A good adjustability requires a relatively large number of degrees of freedom of movement of the different parts of the seat. However, particularly with car seats it has been found that in the case of collisions wherein the seat and the user are subjected to great accelerations, the seat cannot support the user sufficiently as a result of its many degrees of freedom,whereby such collisions can lead to undesirable and unnecessarily serious injury to the user. Particularly when a car is driven into from behind and the user is pressed into the seat back with force, an injury is often found to occur that is known under the collective name of "whiplash".

The invention therefore has for its object to pro-vide a seat of the above described type which is well adjustable, but still provides the user sufficient protection in the case of accidents. According to the invention this is achieved through means for controlling a relative movement of the seat back and the seat part under an impact load. Controlling the mutual movement of the seat back and the seat part prevents rapid deflection of the seat back in longitudinal direction of the vehicle in the case of a collision whereby the back, neck and head of the user are no longer supported but will, on the contrary, be struck with force against the seat back with some delay, thus causing the above stated injury.

Preferred embodiments of the seat according to the invention form the subject-matter of the dependent claims.

The invention also relates to a vehicle provided with at least one seat of the above described type.

The invention is now elucidated on the basis of a number of embodiments, wherein reference is made to the accompanying drawing, wherein:
Fig. 1 is a partly broken away perspective view of a seat according to a first embodiment of the invention mounted in a vehicle,
Fig. 2 shows a seat according to a second embodiment of the invention, and
Fig. 3 shows an alternative fixation mechanism for use in the seat of fig. 2.

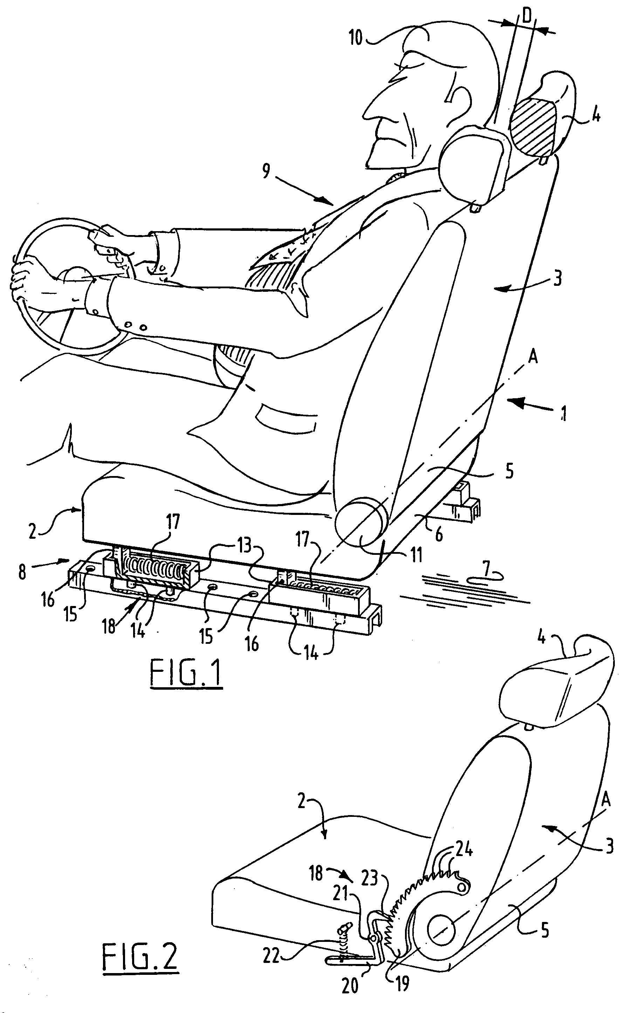

A vehicle seat 1 (fig. 1) is provided with a seat part 2, on the rear side 6 of which a seat back 3 is arranged at its underside 5 for pivoting on an axis A. The seat back 3 has on its upper side a head support 4. The seat 1 can be further provided with a neck support (not shown here) of the type described in applicant's earlier Netherlands patent application no. 9400588. The seat part 2 of seat 1 is fixed to a base 7, in this case the floor of the vehicle, with interposing of fixing means 8. A user 9, in this case the vehicle driver, is seated on a seat 1. The shape and dimensions of seat part 2, seat back 3 and the optionally height-adjustable head support 4 are chosen such that the body of the user is supported at the important positions by the seat 1. The angle between the seat back 3 and the seat part 2 can herein be varied by means of an adjusting grip 11. In a normal driving posture the head 10 of the user 9 will be situated at a distance D in front of the head support 4 of seat 1.

The fixing means 8 with which the seat part 2 of seat 1 is fixed to the floor 7 of the vehicle comprise two parallel guide rails 12 which extend in the travel direction of the vehicle and in the upper surface of which openings 15 are arranged at regular mutual distance, in addition to carriers 13 connected to the seat part 2 of seat 1 and displaceable over guide rails 12. The carriers 13 are each provided on their underside with a plurality of protruding parts 14 which engage in the openings 15 of guide rails 12 in order to position the seat 1. It will otherwise be apparent to the skilled person that the fixing means 8 are only shown schematically here and that in reality all kinds of further provisions will be present to make the carriers 13 easily displaceable along rails 12 and simultaneously to ensure under all conditions a certain fixing in a chosen position.

In order to prevent the seat back 3 deflecting rapidly to the rear relative to the seat part 2 in the case the vehicle is driven into in longitudinal direction (thus from the front or rear), the seat 1 is provided with movement control means 18. This is important, since it has been found in collision tests that in the case of an impact from behind the seat back of an average vehicle seat deflects rapidly to the rear before the back of the user makes a similar movement. The back of the user hereby comes free of the seat back and the distance D between the head of the user and the head support of the seat first increases before, a little later (in the order of several tens of milliseconds), the back of the user is again pressed with force against the seat back and the head of the user is struck violently against the head support. Because the seat back thus displaces or deforms earlier than the back of the user the final load on the back, neck and head of the user is greater than would be the case if the seat were to behave as a fully form-retaining element. Due however to the movement control means 18 according to the present invention the movement of the seat back 3 relative to the seat part 2 of seat 1 is controlled, i.e. bounded or delayed such that it occurs simultaneously with the movement of the back, whereby the final load on the back of the user resulting from the rearward impact load will be considerably smaller than in the case of a conventional vehicle seat.

In the shown first embodiment of the seat according to the invention the movement control means 18 are formed by the legs 16 of the seat embodied as carriage elements which are slidable relative to the floor 7 in the direction of travel of the vehicle. The legs 16 are slidably received in the carriers 13 and during normal operation of the vehicle are pressed against the front part of carriers 13 by a very stiff pressure spring 17. In the case of a collision from behind, however, the springs 17 will each be compressed a little as a consequence of the mass inertia forces of the seat 1 and the driver 9, whereby the seat part 2 of seat 1 makes a delayed movement relative to the base or floor 7 of the vehicle. The rearward bending or giving way of seat back 3 is hereby also postponed whereby seat back 3 will eventually be moved rearward only when the back of the user 9 strikes against it. In this manner the back of the user is optimally supported and the distance D between the head 10 of the user and the head support 4 of seat 1 is minimized, whereby the force with which the head 10 will make contact with the head support 4 is likewise minimized and the danger of injury damage in the form of "whiplash" remains limited.

Instead of the helical springs 17 shown here, other damping means could of course also be used such as for instance gas springs, hydraulic cylinders and the like. Mechanical springs other than helical springs could also be used. It is also conceivable to make use, instead of springs or dampers, of simply plastically deformable constructions along the lines of the so-called crush zones. Such constructions would not return to their original form after a collision and thereby represent a clear indication that the vehicle seat has been heavily loaded and should therefore be checked and/or replaced.

In addition to a slidable connection between the seat part 2 and the base 7, the movement control means 18 can also comprise a connection between the seat part 2 and the seat back 3 of seat 1 which is slidable under load. Such a slidable connection, which results in the seat back 3 making a delayed movement relative to the seat part 2 in the case of a collision from the rear, whereby as explained above the risk of "whiplash" is considerably reduced, can likewise assume the form of a hinge connection between seat part 2 and seat back 3 of seat 1 accommodated in a spring-mounted or simply deformable construction.

Such a slidable connection between seat part 2 and back 3 could of course also be applied separately in a seat attached fixedly to the base 7, that which, however, does not form part of the invention.

In a second embodiment of the invention (fig. 2) a choice has been made to strengthen the connection between the seat back 3 and the seat part 2 of seat 1. For this purpose the conventional adjusting mechanism of the seat, which is based on a friction mechanism, is replaced by a ratchet mechanism with a comparatively sharply curving gear rack 19 which is fixed to the seat back 3 and a lever 20 fixed to seat part 2 and provided with a ratchet 23. The lever 20 which is pivotable on a shaft 21 fixed to seat part 2 is biased by means of a tension spring 22 to a position in which ratchet 23 engages with the teeth 24 of gear rack 19. By moving lever 20 downward counter to the tension of spring 22 the ratchet 23 is disengaged from the teeth 24 and the seat back 3 can be adjusted relative to seat part 2. However, when ratchet 23 engages with teeth 24 the seat back 3 and the seat part 2 are fixed relative to each other, whereby no deflection of seat back 3 is possible. In order to optimize strengthening of the connection between seat back 3 and seat part 2 of seat 1 the point of application of gear rack 19 to seat back 3 is preferably placed as high as possible, while the lever 20 will preferably be arranged as far forward as possible on seat part 2. A triangle of forces that is as great and rigid as possible is obtained in this way. With a view to the convenience of ingress of a user 9 the ratchet mechanism 18 is preferably arranged on the side of seat 1 facing toward the middle of the vehicle.

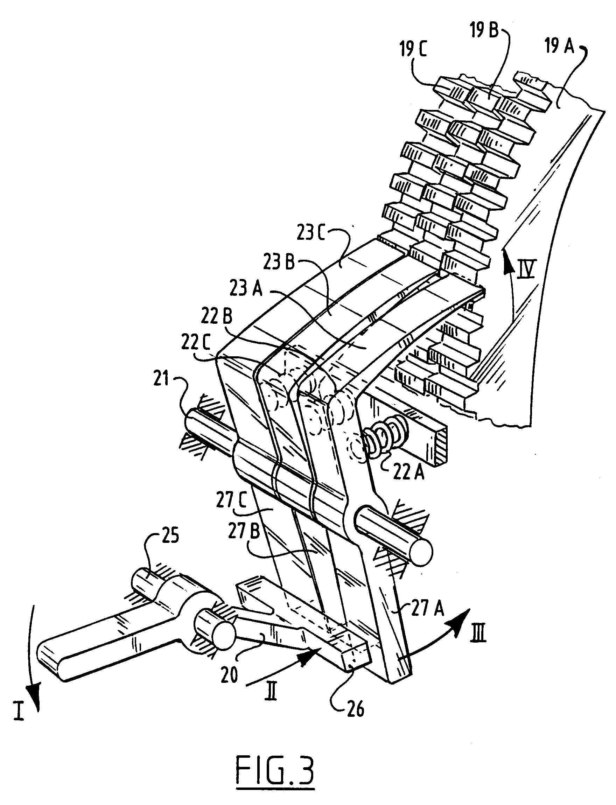

In order to obtain optimum adjustability of seat back 3 relative to seat part 2 without having to make use of a gear rack 19 with small teeth and a small ratchet engaging therein, which in any case would not be able to absorb too great a load, the ratchet mechanism of fig. 3 can be applied. Three curved gear racks 19A, 19B, 19C with comparatively large teeth 24A, 24B, 24C are herein mutually connected, wherein the teeth of the three gear racks are in each case slightly shifted relative to each other. The ratchet mechanism further comprises three ratchets 23A, 23B, 23C which are pivotable on a collective shaft 21 and which can be displaced independently of each other and are each provided with a biasing (presser) spring 22A, 22B, 22C. The ratchets 23A, 23B, 23C are actuated by a collective actuating arm 20 which is pivotable under a shaft 25 and of which an actuating outer end 26 engages with the bottom end 27A, 27B, 27C of the three ratchets 23A, 23B, 23C.

By moving the actuating arm 20 downward counter to the force of springs 22A, 22B, 22C, the bottom ends 27A, 27B, 27C of ratchets 23A, 23B, 23C are moved to the right in the drawing whereby the ratchets disengage from the teeth of their associated gear racks 19A, 19B, 19C. The seat back 3 can hereby be adjusted relative to seat part 2. When a desired adjustment angle is obtained, the actuating arm 20 can be released, whereby ratchets 23A, 23B, 23C will move back under the influence of their biasing springs 22A, 22B, 22C to the position in which they engage with the associated gear racks 19A, 19B, 19C. One of the ratchets 23A, 23B, 23C will herein fall into a valley between two teeth 24A-A, 24B-B, 24C-C of the associated gear rack 19A, 19B, 19C while the other two ratchets will rest against a tooth crest. In this manner the seat back 3 is fixed in each case relative to seat part 2 by one of the three ratchets, while an adjustability is achieved with a step size of 1/3, the tooth pitch of each of the three gear racks 19A, 19B, 19C.

Although a number of embodiments of the seat according to the invention are shown and described above, it will be apparent to the skilled person that many variants are possible if not departing from the scope of the invention as defined in the appended claims. What is important here is only that the relative movement of the seat back 3 and the seat par 2 of seat 1 is controlled, thus either minimized such that seat back 3 remains under all conditions in contact with the back of the user 9 or delayed such that the seat back 3 will only move when the back of the user 9 strikes against it.

## Claims

1. Seat (1), in particular for use in a vehicle, provided with a seat part (2), a seat back (3) connected thereto on a rear side (6) and means (8) connected to the seat part (2) for fixing thereof to a base (7), in particular a vehicle floor, and further comprising means (18) for controlling a relative movement of the seat back (3) and the seat part (2) under an impact load from the rear, the movement control means (18) comprising carriage elements (16) slidable in rearward direction, **characterized in that** said carriage elements (16) connect the base (7) and the fixing means (8), and during normal operation of the vehicle are held in a foremost position by compressible biasing means (17), so as to delay a rearward movement of the seat part (2) and seat back (3) under a rear impact.

2. Seat (1) as claimed in claim 1, **characterized in that** said biasing means (17) comprise at least one spring.

3. Seat (1) as claimed in claim 1 or 2, **characterized in that** the biasing means (17) comprise a construction element which is simply plastically deformable under the impact load.

4. Seat (1) as claimed in any of the foregoing claims, **characterized in that** the movement control means (18) further comprise an adjustable fixation mechanism arranged between the seat part (2) and the seat back (3).

5. Seat (1) as claimed in claim 4, **characterized in that** the fixation mechanism comprises at least one gear rack (19) connected to the seat back (3) or the seat part (2) and at least one ratchet member (23) connected to the seat part (2) or the seat back (3) and for placing in engagement with the gear rack (19).

6. Seat (1) as claimed in claim 5, **characterized by** biasing means (22) connected to the ratchet member (23).

7. Vehicle provided with at least one seat (1) as claimed in any of the foregoing claims.

## Patentansprüche

1. Sitz (1), insbesondere zur Verwendung in einem Fahrzeug, der versehen ist mit einem Sitzteil (2), einem mit diesem an einer Rückseite (6) verbundenen Sitzrückenteil (3) und Mitteln (8), die mit dem Sitzteil (2) verbunden sind um dieses an einem Boden (7), insbesondere einem Fahrzeugboden, zu fixieren und die desweiteren Mittel (18) umfassen, zum Steuern einer Relativbewegung des Sitzrückenteils (3) zu dem Sitzteil (2) unter einer Stoß- bzw. Aufprallbelastung von hinten, wobei die Bewegungssteuermittel (18) Trägerelemente (16) umfassen, die Richtung nach hinten verschiebbar sind, dadurch gekennzeichnet, daß die Trägerelemente (16) den Boden (7) und die Fixiermittel (8) verbinden und während des normalen Betriebs des Fahrzeugs mittels komprimierbarer Vorspannmittel (17) in einer vordersten Position gehalten sind, um eine rückwärtige Bewegung des Sitzteils (2) und des Sitzrückenteils (3) unter einem Stoß- bzw. Aufprall von hinten zu verzögern.

2. Sitz (1) nach Anspruch 1, dadurch gekennzeichnet, daß die Vorspannmittel (17) wenigstens eine Feder umfassen.

3. Sitz (1) nach Anspruch 1 oder 2, dadurch gekennzeichnet, daß die Vorspannmittel (17) ein Konstruktionselement umfassen, das unter der Stoß- bzw. Aufpralllast einfach plastisch verformbar ist.

4. Sitz (1) nach einem der vorstehenden Ansprüche, dadurch gekennzeichnet, daß die Bewegungssteuermittel (18) desweiteren einen einstellbaren Fixiermechanismus umfassen, der zwischen dem Sitzteil (2) und dem Sitzrückenteil (3) angeordnet ist.

5. Sitz (1) nach Anspruch 4, dadurch gekennzeichnet, daß der Fixiermechanismus wenigstens eine Zahnstange (19) umfaßt, die mit dem Sitzrückenteil (3) oder dem Sitzteil (2) verbunden ist und wenigstens ein Klinkenteil (23), das mit dem Sitzteil (2) oder dem Sitzrückenteil (3) verbunden ist und das in Eingriff mit der Zahnstange (19) anordenbar ist.

6. Sitz (1) nach Anspruch 5, gekennzeichnet durch mit dem Klinkenteil (23) verbundene Vorspannmittel (23).

7. Fahrzeug, das mit wenigstens einem Sitz (1), wie er in einem der vorstehenden Ansprüche beansprucht wurde, versehen ist.

## Revendications

1. Siège (1), en particulier destiné à un véhicule, comportant une partie d'assise (2), un dossier de siège (3) relié à celle-ci sur une face postérieure (6) et des moyens (8) reliés à la partie d'assise (2) en vue de fixer celle-ci à une base (7), en particulier un plancher de véhicule, et comportant en outre des moyens (18) destinés à contrôler un déplacement relatif du dossier de siège (3) et de la partie d'assise (2) sous une charge d'impact venant de l'arrière, les moyens de contrôle du déplacement (18) comprenant des éléments de chariot (16) capables de coulisser vers l'arrière, caractérisé en ce que lesdits éléments de chariot (16) relient la base (7) et les moyens de fixation (8) et, pendant le fonctionnement normal du véhicule, sont maintenus dans une position antérieure par des moyens de précontrainte compressibles (17) afin de retarder un déplacement vers l'arrière de la partie d'assise (2) et du dossier de siège (3) sous l'effet d'un choc à l'arrière.

2. Siège (1) selon la revendication 1, caractérisé en ce que lesdits moyens de précontrainte (17) comprennent au moins un ressort.

3. Siège (1) selon la revendication 1 ou 2, caractérisé en ce que les moyens de précontrainte (17) comprennent un élément de construction simplement capable de déformation plastique sous la charge d'impact.

4. Siège (1) selon l'une ou l'ensemble des revendications précédentes, caractérisé en ce que les moyens de contrôle du déplacement (18) comportent en outre un mécanisme de fixation réglable disposé entre la partie d'assise (2) et le dossier de siège (3).

5. Siège (1) selon la revendication 4, caractérisé en ce que le mécanisme de fixation comporte au moins une crémaillère (19) reliée au dossier de siège (3) ou à la partie d'assise (2) et au moins un élément formant cliquet (23) relié à la partie d'assise (2) ou au dossier de siège (3) et disposé de façon à se mettre en prise avec la crémaillère (19).

6. Siège (1) selon la revendication 5, caractérisé en ce qu'il comporte des moyens de précontrainte (22) reliés à l'élément formant cliquet (23).

7. Véhicule comportant au moins un siège (1) selon l'une ou l'ensemble des revendications précédentes.
